# EUROPEAN PATENT APPLICATION

(11) **EP 4 793 079 A1**
(43) Date of publication of application: **19.08.2026**
(21) Application number: 25219155.6
(22) Date of filing: 27.11.2025
(51) Int. Cl.: B60K 35/10, B60K 35/22, B60K 35/80, G06F 3/0481, G06F 3/04886

(54) **CONTROL DEVICE**

(30) Priority: 18.02.2025 KR 20250020945
(71) Applicant: Hyundai Mobis Co., Ltd., Gangnam-gu Seoul 06141 (KR)
(72) Inventor: KIM, Won Sik, 16891 Yongin-si, Gyeonggi-do (KR)
(74) Representative: Jung, Minkyu

(57) **Abstract**

A control device may include a display device and an interior panel that is operatively linked to the display device and includes a touch-sensitive surface on one surface, and a control mode of the interior panel may be changeable by operating the display device. The touch-sensitive surface may be configured to be illuminated in response to a user touch, and a function of the control mode may be controlled based on a user input provided to the touch-sensitive surface.

## Description

### CROSS-REFERENCE TO RELATED APPLICATION

This application claims priority to and the benefit of Korean Patent Application No. 10-2025-0020945, filed on February 18, 2025, in the Korean Intellectual Property Office, the disclosure of which is incorporated herein by reference in its entirety for all purposes.

### BACKGROUND

### 1. Field

The present invention relates to a control device, and more specifically, to a vehicle control device capable of controlling various functions of a vehicle.

### 2. Discussion of Related Art

Various devices are installed inside a vehicle, and a number of control devices are installed to control these functions. As the number of functions requiring control increases, research on methods of controlling a number of functions based on user input through display devices such as displays is being conducted.

In order to control a number of functions through one or a few of control devices, it is necessary to use a relatively large device or to subdivide each control method. Accordingly, there is a disadvantage in that the control device becomes excessively large or the control method becomes complicated.

There is a growing demand for a control device or control method capable of controlling various functions of a vehicle without compromising the aesthetic appearance and convenience of the vehicle.

### SUMMARY

The present invention is directed to providing a control device capable of controlling various functions of a vehicle while providing an excellent aesthetic appearance.

Problems to be solved by the present invention are not limited to those mentioned above, and other problems not mentioned will be clearly understood by those skilled in the art from the following description.

In one general aspect, a control device includes a display device; and an interior panel operatively linked to the display device, the interior panel including a touch-sensitive surface on one surface thereof, wherein a control mode of the interior panel is changeable by operating the display device, wherein the touch-sensitive surface is configured to be illuminated in response to a user touch, and wherein a function associated with the control mode is controllable based on a user input provided to the touch-sensitive surface.

In some embodiments, the touch-sensitive surface may be partitioned into a plurality of cells and is configured to be illuminable on a per-cell basis.

In some embodiments, the function may be controlled based on a number of cells touched by the user when the user performs a drag input on the touch-sensitive surface.

In some embodiments, the display device may be configured to display a first interface for controlling an air volume and a wind direction of an air vent when a first control mode is implemented.

In some embodiments, an image of the air vent may be displayed on the first interface, and a determination may be made as to whether the air vent is to be operated in response to a first user input provided on the touch-sensitive surface.

In some embodiments, the air volume and the wind direction of the air vent may be adjusted based on a second user input, and adjustments to the air volume and the wind direction may be proportional to a size of a touch area associated with the second input.

In some embodiments, the display device may be configured to display a second interface for controlling brightness and color of a lighting device when a second control mode is implemented.

In some embodiments, an image of the lighting device may be displayed on the second interface, and an operating mode of the lighting device may be determined based on a first user input provided on the touch-sensitive surface.

In some embodiments, the brightness and the color of the lighting device may be adjusted based on a second user input, and adjustments to the brightness and the color may be proportional to a size of a touch area associated with the second input.

In some embodiments, the interior panel may be operatively linked to a glove box when a third control mode is implemented, and the glove box may be opened or closed in response to an user input provided to the touch-sensitive surface.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating a control device according to one embodiment of the present invention;
FIG. 2 is a view illustrating a cross section of an interior panel according to the embodiment;
FIG. 3 is a view illustrating the front of the interior panel according to the embodiment;
FIG. 4 is a view illustrating an operation of touching a touch-sensitive surface of the interior panel according to the embodiment;
FIGS. 5 to 7 are views illustrating operations of controlling an air conditioning device by the control device according to the embodiment;
FIGS. 8 to 11 are views illustrating operations of controlling a lighting device by the control device according to the embodiment; and
FIG. 12 is a view illustrating an operation of controlling a glove box by the control device according to the embodiment.

### DETAILED DESCRIPTION

Since the present invention may be variously modified and have several embodiments, specific embodiments thereof will be illustrated in the drawings and described in detail. However, this is not intended to limit the present invention to the specific embodiments, and it should be understood to include all modifications, equivalents, and substitutes included in the spirit and scope of the present invention. In describing the present invention, when it is determined that the detailed description of the related known technology may obscure the subject matter of the present invention, the detailed description thereof will be omitted.

While terms "first," "second," etc., may be used herein to describe various elements, such elements should not be limited by the terms. These terms are only used to distinguish one element from another element.

Terms used in the present application are merely provided to describe specific embodiments, and are not intended to limit the present invention. The singular forms are intended to include the plural forms as well, unless the context clearly indicates otherwise. In the present application, it will be understood that terms "include," "have," or the like are intended to specify the presence of features, integers, steps, operations, elements, components, and/or combinations thereof stated in the specification, but do not preclude the possibility of the presence or addition of one or more other features, integers, steps, operations, elements, components, or combinations thereof in advance.

In addition, throughout the specification, when "connected" is used, this does not only mean two or more components are directly connected, but means that two or more components are indirectly connected through another component, that the components are not only physically connected, but also electrically connected, or that the components are integrated although the components are referred to as different names depending on a location or a function.

Further, when a component is described as being formed or disposed "on (above) or under (below)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

Hereinafter, one embodiment of a control device according to the present invention will be described in detail with reference to the accompanying drawings, and in giving description with reference to the accompanying drawings, identical or corresponding components will be assigned the same numbers and overlapping descriptions thereof will be omitted.

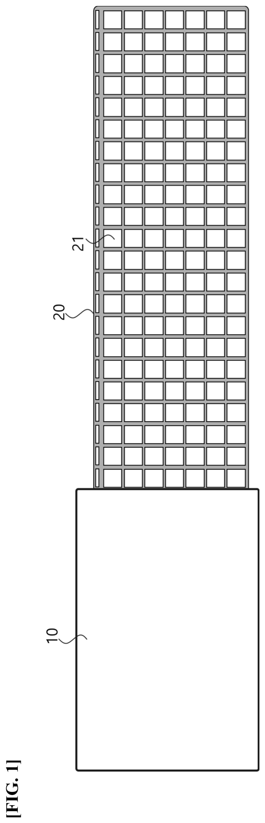

FIG. 1 is a view illustrating a control device according to one embodiment of the present invention.

The control device according to the embodiment of the present invention may include a display device 10 and an interior panel 20. The interior panel 20 may be disposed on interior parts of the vehicle. For example, the interior panel 20 may form a boundary of a cockpit provided at the front of the vehicle. The interior panel 20 may form the exterior of the cockpit.

The interior panel 20 may be applied across the interior of the vehicle, including doors, a console, and the like in addition to a cockpit module. For example, the interior panel 20 may form a garnish inside a vehicle cabin. When the interior panel 20 forms the garnish, the garnish may cover at least a portion of the cockpit and door, and may cover a frame of each component and a periphery of the frame.

The interior panel 20 may extend in a width direction of the vehicle and cover at least a portion of the cockpit. The display device 10 may be disposed on one surface of the cockpit. The display device 10 may correspond to a touch-capable display device. The display device 10 may be disposed on one side of the interior panel 20.

The interior panel 20 may include a touch-sensitive surface 22 capable of recognizing a user's touch. The touch-sensitive surface 22 may be formed on one surface of the interior panel 20, and may recognize the user's touch. The user may control functions of the vehicle by touching the touch-sensitive surface 22. Therefore, the interior panel 20 may be operatively linked to various devices equipped in the vehicle.

The interior panel 20 may be linked to a lighting device, an air conditioning device, and the like of the vehicle. The user may control the lighting device, the air conditioning device, and the like by operating the interior panel 20. The touch-sensitive surface 22 is formed in at least one area of the interior panel 20, and the area may be an area corresponding to the exterior of the interior panel 20.

The interior panel 20 may include a light source to enable light emission. The light source may be provided on the inner side of the interior panel 20. When the light source emits light, the light may exit through the surface of the interior panel 20. Since the light source is disposed inside the interior panel 20, the interior panel 20 may perform a role similar to indirect lighting or mood lighting.

The touch-sensitive surface 22 may be partitioned into a plurality of cells 21. The interior panel 20 may be illuminated in response to a user's touch. A location where the light is illuminated may be changed in response to the user's touch. The plurality of cells 21 correspond to a minimum area to be illuminated. Therefore, at least some of the plurality of cells 21 may be illuminated. The illuminated cells 21 correspond to cells 21 corresponding to a touch area of the user.

The display device 10 and the interior panel 20 may be operatively linked. The display device 10 may display information on various functions of the vehicle. The display device 10 may display a user interface. The user may operate the display device 10 by touching the interface, and the device and function operatively linked to the interior panel 20 may be changed accordingly.

The control device according to the present invention may implement a plurality of control modes. Each control mode may control different devices. For example, the air conditioning device may be controlled in a first control mode. A second control mode is a mode that may control the lighting device.

An interface may be provided to control detailed functions of the device controlled in each control mode. The interface may be provided in a manner that allows the interface to be displayed on the display device 10. In the first control mode, on an interface 10a, information on an air volume, a wind direction, or an air conditioning mode of the air conditioning device may be displayed. The user may select a function the user wants to control through the interface 10a. When the function is selected, the interior panel 20 may be operatively linked with the display device 10 and the air conditioning device being controlled to control the function.

The above is merely an example, and the control may be implemented in the same manner when controlling other devices that may be controlled inside the vehicle.

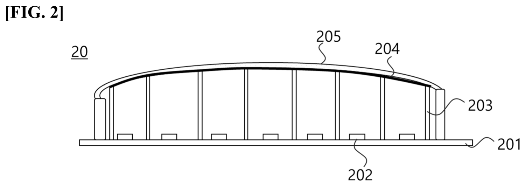

FIG. 2 is a view illustrating a cross section of the interior panel according to the embodiment.

The interior panel 20 may be formed in a layered structure as illustrated in FIG. 2. A circuit board 201 may be provided on a bottom surface of the layered structure. A light-emitting device (LED) 202 is provided on the circuit board 201. A light-emitting element other than the LED 202 may also be disposed.

A guide portion 203 may be disposed in a space between a surface of the interior panel 20 and the circuit board. The guide portion 203 may support an empty space of the interior panel 20 and serve to guide the light emitted from the LED 202.

The guide portion 203 may be formed in a grid shape. Each LED 202 may be disposed in the partitioned grid, and in this way, the touch-sensitive surface 22 partitioned in units of cells 21 may be displayed. The surface of the interior panel 20 may be formed as a cover portion 205. The cover portion 205 may be provided with a touch film 204 or a touch sensor. The touch film 204 may capacitively recognize touch.

The user touches the cover portion 205 and the touch film 204 attached to the cover portion 205 recognizes the user's touch, thereby allowing the user to operate the interior panel 20. The touch film 204 may recognize the user's touch in a non-capacitive method. The touch film 204 or the touch sensor may be a pressure sensor. The touch film 204 or touch sensor may recognize the user's touch by detecting changes in pressure on a part the user touches.

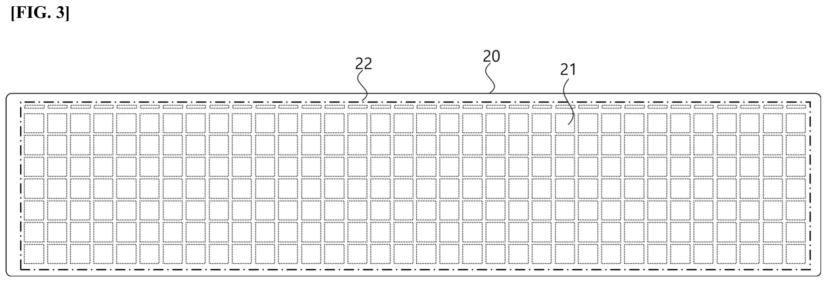

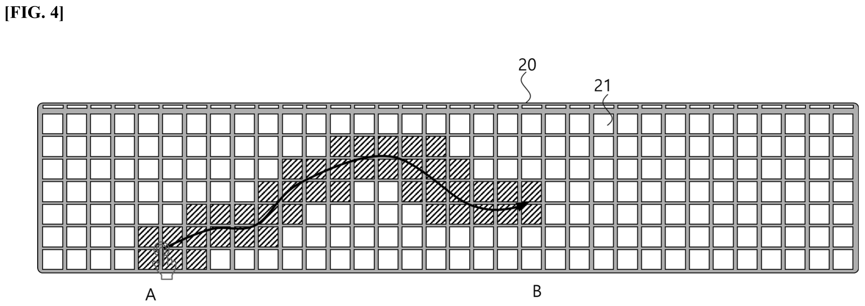

FIG. 3 is a view illustrating the front of the interior panel according to the embodiment, and FIG. 4 is a view illustrating an operation of touching the touch-sensitive surface of the interior panel according to the embodiment.

Referring to FIG. 3, the interior panel 20 may be partitioned into a plurality of cells 21. Each cell 21 may be formed as a projection of the grid shape formed in the guide portion as described above. That is, light may pass through interspaces of the grid shape, allowing a plurality of cells 21 to be displayed.

The cell 21 corresponds to an illumination unit of the interior panel 20. That is, illumination of the interior panel 20 is possible in units of cells 21.

The cell 21 is not exposed externally when the interior panel 20 is not illuminated. When at least a portion of the interior panel 20 is illuminated, a cell 21 corresponding to the illuminated portion may be externally displayed. A portion that is not illuminated may implement the design of the general interior panel 20.

The interior panel 20 may serve as the display device 10 as a whole. The interior panel 20 may provide a continuous image with surrounding components, and when the interior panel 20 is not illuminated, the impression similar to the general interior panel 20 may be given by the cover portion that covers the exterior of the interior panel 20. The interior panel 20 according to the present invention may implement a hidden image when not illuminated.

When the interior panel 20 is illuminated, a remaining area except the illuminated area is maintained in a state of implementing the hidden image. The remaining area may implement a continuous image with other components of the vehicle and give a premium impression.

One surface of the interior panel 20 corresponds to the touch-sensitive surface 22. The touch-sensitive surface 22 is an area including the cells 21 of the interior panel 20. The corresponding area may be illuminated in response to the user's touch, and the basic unit of illumination may correspond to the cell 21. At least some of the cells 21 may be illuminated in response to the user's touch. Each cell 21 may be illuminated with a different color and brightness. The touch-sensitive surface 22 may implement a pattern through a combination of illuminated cells 21.

FIG. 4 illustrates the operation in which the user touches the touch-sensitive surface 22 of the interior panel 20. When the user touches the touch-sensitive surface 22 along an arrow illustrated in FIG. 4, the cells 21 overlapping or adjacent to the touched area may be illuminated. The cells 21 may be illuminated along an area of the user's touch. A time during which illumination is maintained may correspond to a preset illumination time. Therefore, the cells 21 may be sequentially illuminated and sequentially turned off.

In the case of FIG. 4, it is illustrated that a range of two to three cells 21 is illuminated based on the area of the user's touch. Alternatively, illumination may occur along the area touched by the user, and additionally, an entire area in a vertical or horizontal direction may also be illuminated.

The touch-sensitive surface 22 of the interior panel 20 may recognize the user's touch. The user's touch corresponds to an input on the touch-sensitive surface 22. The form of the input is not limited to simply touching. The user may touch the touch-sensitive surface 22 for a short time. Alternatively, the user may drag along the touch-sensitive surface 22. Alternatively, the user may press the touch-sensitive surface 22 for a certain time. Depending on each input, the touch-sensitive surface 22 may be illuminated in different ways.

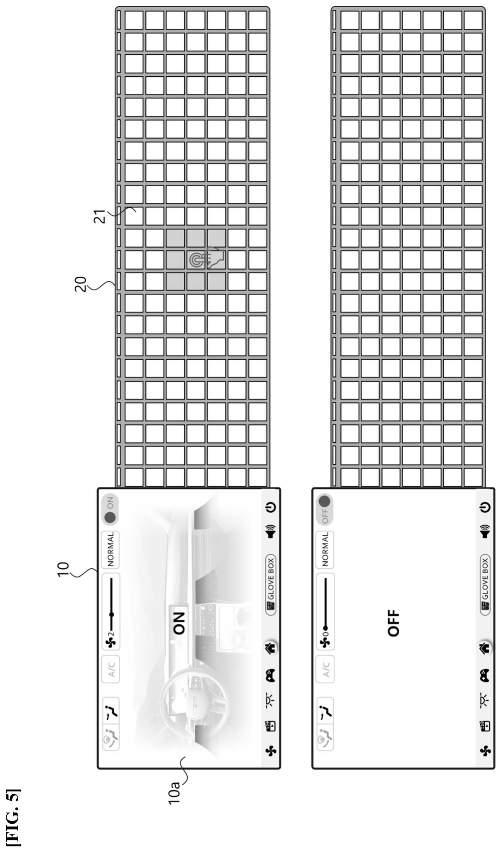

FIGS. 5 to 12 illustrate operations of controlling various functions of the vehicle through the interior panel 20 and the display device 10. A method by which the control device according to the embodiment, which is operatively linked to the air conditioning device, the lighting device, and a glove box 30 of the vehicle, controls corresponding functions will be described. The above functions are merely exemplary, and it is also possible to control other functions.

FIGS. 5 to 7 are views illustrating operations of controlling the air conditioning device by the control device according to the embodiment.

The display device 10 may display the interface 10a for controlling the air conditioning mode.

The interface 10a illustrated in FIGS. 5 to 7 displays an image of the interior of the vehicle, and displays information on the air conditioning mode and the air volume on one side.

FIG. 5 is a view illustrating an operation of controlling the on/off state of the air conditioning device through operation of the interior panel 20. The user may turn on the air conditioning device by touching one area on the touch-sensitive surface 22 of the interior panel 20. Turning on the air conditioning device may mean controlling an operating state of the air conditioning mode. Alternatively, turning on the air conditioning device may correspond to the display device 10 and the interior panel 20 beginning to be operatively linked to the air conditioning device. Alternatively, turning on the air conditioning device may mean performing the both functions at the same time.

FIG. 5 illustrates the operation of turning on or off the air conditioning device of the vehicle through operation of the interior panel 20. When the display device 10 displays the interface 10a for controlling the air conditioning mode, the user may control the operating state of the air conditioning device by touching one area of the interior panel 20.

The user may control the operating state of the air conditioning device by double tapping one area of the interior panel 20. Alternatively, the user may control the operating state of the air conditioning device by pressing one area of the interior panel 20 for a certain time.

The display of the display device 10 may also be changed corresponding to the user's operation of the interior panel 20. As illustrated in FIG. 5, when the user turns off the air conditioning device by operating the interior panel 20 while the air conditioning device is on, the vehicle interior image that is displayed may disappear. A portion that displays the on/off state of the air conditioning device at an upper right of the display device 10 may be changed from ON to OFF.

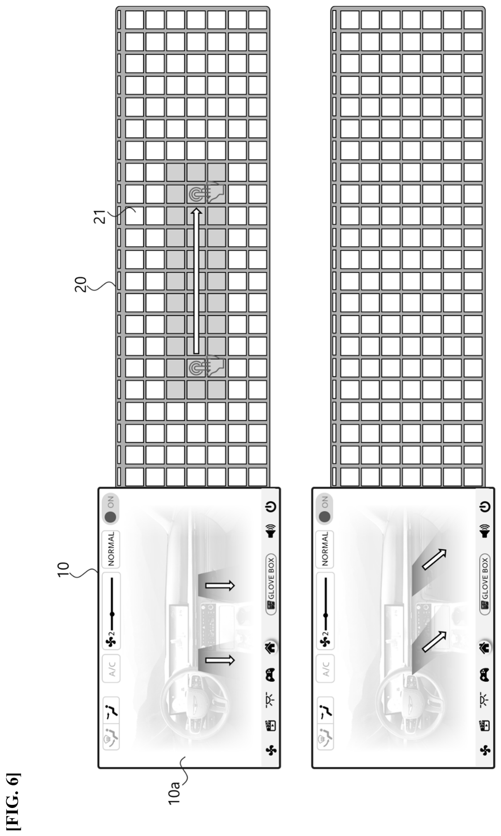

FIG. 6 is a view showing the operation of controlling the wind direction through operation of the interior panel.

Referring to FIG. 6, when the display device 10 displays the interface 10a for controlling the air conditioning device, an image of an air vent inside the vehicle and an image of air being discharged may be displayed. The image of air may be displayed in a direction from the air vent toward the interior of the vehicle.

The user may drag on one area of the interior panel 20 to change the air discharge direction in a dragged direction. FIG. 6 illustrates that the user drags on the interior panel 20 from the left to the right, and accordingly, the air discharge direction also changes from the left to the right.

The amount of change in the air discharge direction may correspond to a length of the user's drag area. When the user drags on the touch-sensitive surface 22 of the interior panel 20, a user's touch portion may include a plurality of cells 21. The amount of change in the air discharge direction per unit cell 21 may be set.

For example, the air discharge direction per cell 21 may be changed by 5 degrees. In this case, when the user drags through a total of six cells 21, the air discharge direction may be rotated 30 degrees.

In the present embodiment, the discharge direction is shown as being changed left and right, but it is also possible to control the discharge direction in a vertical or diagonal direction. Likewise, the user may drag on the touch-sensitive surface 22 of the interior panel 20 in a vertical or diagonal direction to control the air discharge direction in a direction corresponding to a dragged direction.

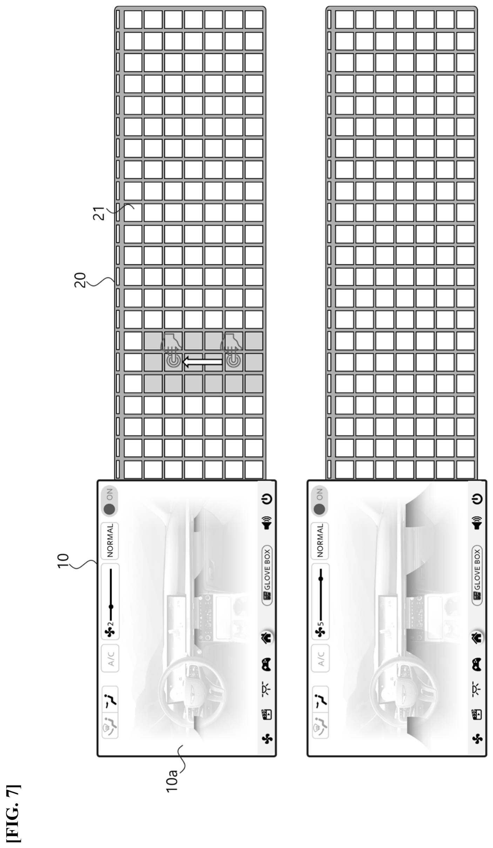

FIG. 7 is a view illustrating an operation of controlling the air volume through operation of the interior panel.

Referring to FIG. 7, information on an air volume may be displayed on the display device 10 that displays the interface 10a for controlling the air conditioning device. The user may adjust the air volume by directly touching the display device 10, but it is also possible to control the air volume through operation of the interior panel 20.

As illustrated in FIG. 7, when the user drags on the touch-sensitive surface 22 of the interior panel 20, the air volume may be adjusted corresponding to a length of the dragged area.

FIG. 7 illustrates that the air volume is adjusted by dragging in an up-and-down direction. When the user drags upward, the air volume may increase, and when the user drags downward, the air volume may decrease.

As illustrated in FIG. 7, the user may increase the air volume by dragging upward. The amount of change in air volume may be proportional to a length or a size of the touched area. For example, the air volume may be adjusted by one unit for each touched cell 21. FIG. 7 illustrates a case where there are a total of three cells 21 included in the dragged area, excluding the cell 21 that is first touched, and accordingly, illustrates that the air volume is changed from 2 to 5.

When the air volume is changed, the air discharge image displayed on the display device 10 may also be changed accordingly. As the air volume increases, the air discharge image may be displayed longer or wider corresponding thereto.

In the present embodiment, the air volume is controlled by dragging the touch-sensitive surface 22 in the up-and-down direction, but it is also possible to control the air volume by dragging in a left-and-right direction.

Changes in the functions controlled by the interior panel 20 may be made through the display device 10. The user may select a function to be operated by the interior panel 20 by operating the display device 10. The user may operate the interior panel 20 to be operatively linked to each function by touching a portion that displays information on an air volume or a portion that displays information on a wind direction. The user may touch a desired air vent to adjust the wind direction and the air volume of the corresponding air vent.

FIG. 5 corresponds to an operation of receiving a first input for being operatively linked to the air conditioning device. FIGS. 6 and 7 correspond to an operation of receiving a second input for operating the air conditioning device. The operation of receiving the first input and the operation of receiving the second input may be sequentially performed.

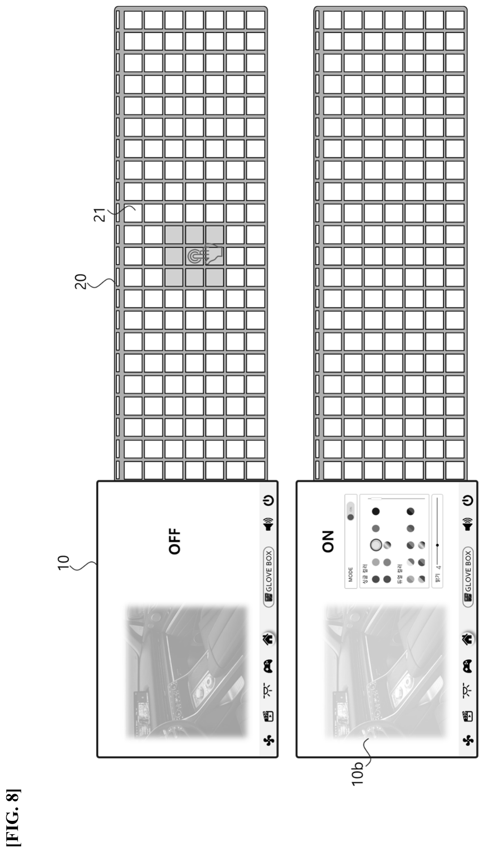

FIGS. 8 to 11 are views illustrating operations of controlling the lighting device by the control device according to the embodiment.

FIG. 8 is a view illustrating an operation of controlling the on/off state of the lighting device through operation of the interior panel 20. The user may turn on the lighting device by touching one area on the touch-sensitive surface 22 of the interior panel 20. Turning on the lighting device may mean controlling the on/off state of the lighting. Alternatively, turning on the air conditioning device may correspond to the display device 10 and the interior panel 20 beginning to be operatively linked to the lighting device. Alternatively, turning on the air conditioning device may mean performing the both functions at the same time.

FIG. 8 illustrates the operation of turning on or off the lighting device through operation of the interior panel 20. When the display device 10 displays an interface 10b for controlling the lighting device, the user may control an operating state of the lighting device by touching one area of the interior panel 20.

The interface 10b for controlling the lighting device may display an image of the lighting inside the vehicle. The lighting inside the vehicle may be provided on the doors, the cockpit, the center fascia, and the like, and the on/off state of the corresponding lighting may be displayed.

The user may turn on the lighting device by tapping one area of the touch-sensitive surface 22. A plurality of taps may be made at short intervals. Alternatively, the user may turn on the lighting device by pressing one area of the interior panel 20 for a certain time.

After the lighting device is turned on through operation of the interior panel 20, the user may change the brightness, the color, and the pattern of the lighting device through the operation of the interior panel 20.

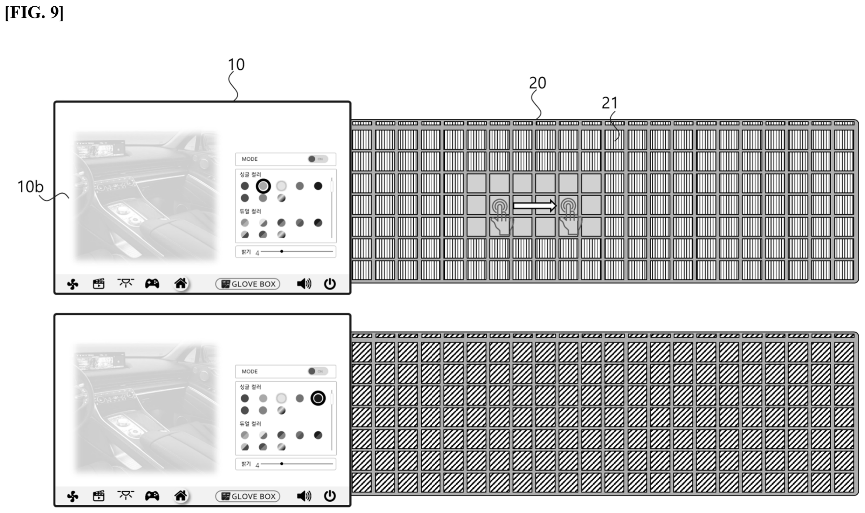

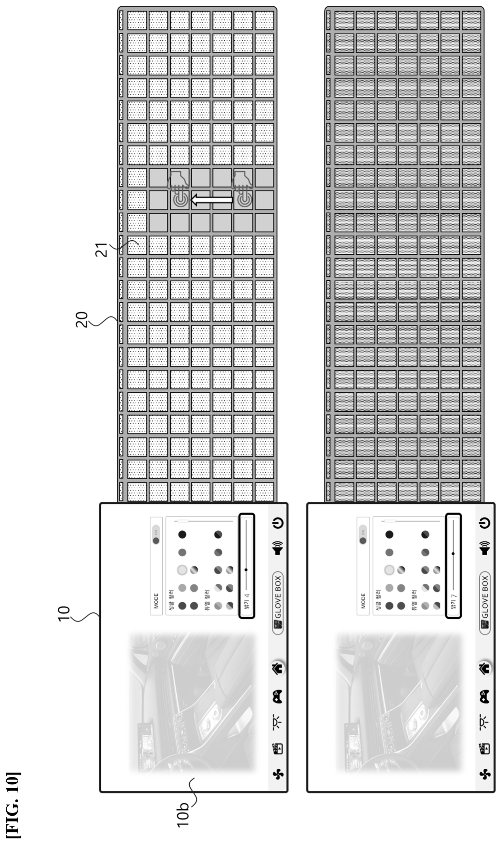

Referring to FIGS. 9 and 10, the user may change the brightness and the color by dragging the touch-sensitive area of the interior panel 20.

When the display device 10 displays the interface 10b for changing the brightness of the lighting device, the user may adjust the brightness by dragging one surface of the interior panel 20. The method by which the brightness is controlled is similar to the method by which the air volume and the wind direction of the air conditioning device described above are controlled.

The user may change the brightness by dragging the touch-sensitive surface 22, and the amount of change in brightness may correspond to a size or a length of the dragged area. For example, the brightness of each cell 21 that is dragged may be changed by 1. FIG. 9 illustrates that a total of three cells 21 are dragged and the brightness is also changed by 3 corresponding thereto.

When the display device 10 displays the interface 10b for changing the color or the pattern of the lighting device, a list of colors and patterns may be presented on the interface 10b. The list displays a currently specified color and pattern, and the user may change the specified color and pattern by dragging the interior panel 20.

The currently specified color and pattern in the presented color and pattern list may be changed to an adjacent color and pattern corresponding to a user's drag. The method by which the color and the pattern are changed may also be changed corresponding to a size or a length of the area of the user's touch. For example, when the user drags three cells 21, the specified color and pattern may be changed to an adjacent color and pattern in a direction corresponding to the drag.

One surface of the interior panel 20 may be illuminated, so that the specified color or pattern may be displayed in real time. The user may check the specified color and pattern through information regarding the illumination of the interior panel 20.

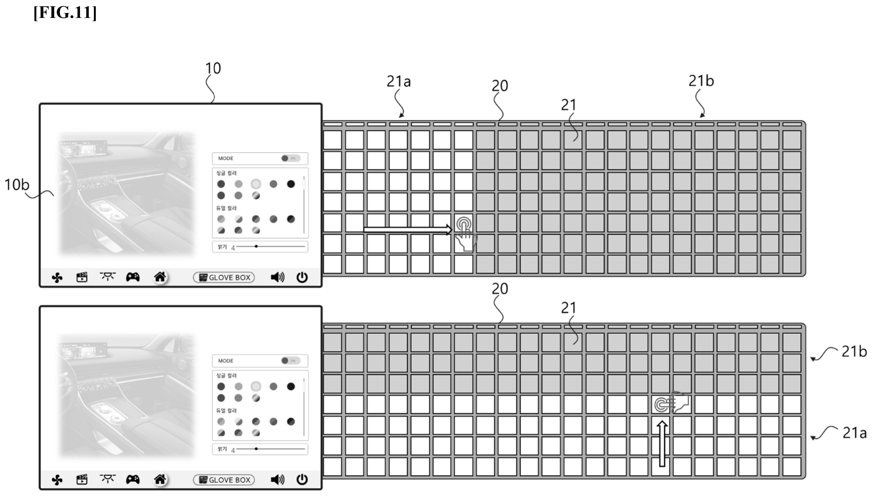

FIG. 11 illustrates the operation of controlling an illumination area of the interior panel 20. The interior panel 20 may be provided with the lighting device such as an LED therein, and may emit light through one surface of the interior panel 20, thereby serving as the lighting device.

The user may control an illumination area of the interior panel 20. The user may select the interface 10b for controlling the illumination area of the interior panel 20 through the display device 10. After the corresponding interface 10b is selected, the user may adjust the area to be illuminated by touching one surface of the interior panel 20.

In order to distinguish the method of adjusting the illumination area from the operation methods of other functions described above, the illumination area may be adjusted in a different way rather than by simply touching and dragging. The user may adjust the illumination area by double tapping a portion of the touch-sensitive surface 22 and then dragging in a state of maintaining the second tap.

When adjusting the illumination area, a portion to be illuminated may be set corresponding to a user's drag. The portion that the user drags may be changed from an illuminated state to a turned-off state. When the user drags, the illuminated state of the entire vertical or horizontal area may be changed based on the dragged portion.

FIG. 8 corresponds to an operation of receiving a first input for being operatively linked to the lighting device. FIGS. 9 to 11 correspond to an operation of receiving a second input for operating the lighting device. The operation of receiving the first input and the operation of receiving the second input may be sequentially performed.

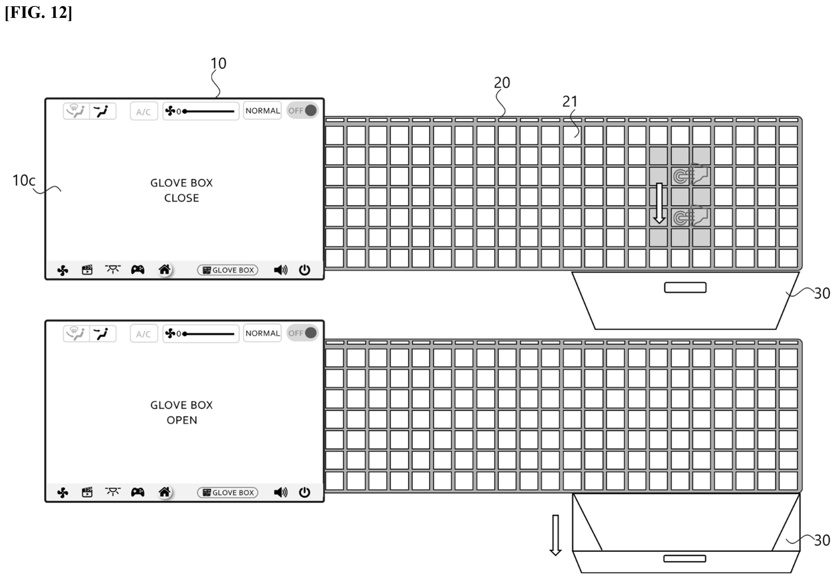

FIG. 12 is a view illustrating an operation of controlling the glove box by the control device according to the embodiment.

When the interior panel 20 is operatively linked to the glove box 30, the user may operate the glove box 30 by providing an input to the touch-sensitive surface 22 of the interior panel 20. The glove box 30 may be disposed on a lower side of the interior panel 20. The user may open and close the glove box 30 by touching one area of the interior panel 20.

For example, the user may open or close the glove box 30 by double tapping one area of an interior panel 20. Alternatively, the user may open or close the glove box 30 by dragging one area of the interior panel 20. When the user drags downward on one surface of the interior panel 20, the glove box 30 may be opened downward to correspond thereto. When the user drags upward on one surface of the interior panel 20, the glove box 30 may be closed upward to correspond thereto.

According to one embodiment of the present invention, by operatively linking a display device and an interior panel, it is possible to easily control various functions of a vehicle by providing an input to a touch-sensitive area of the interior panel that is capable of being illuminated, and to provide a premium aesthetic appearance of the interior panel when the interior panel is not operated.

Various beneficial advantages and effects of the present invention are not limited by the contents described above and should be easily understood through a description of a detailed embodiment of the present invention.

Although the specific embodiments of the present invention have been described above, it is understood that one ordinary skilled in the art may make various changes and modifications to the present invention without departing from the spirit and scope of the present invention as hereinafter claimed.

## Claims

1. A control device comprising:
a display device; and
an interior panel operatively linked to the display device, the interior panel including a touch-sensitive surface on one surface thereof,
wherein a control mode of the interior panel is changeable by operating the display device,
wherein the touch-sensitive surface is configured to be illuminated in response to a user touch, and
wherein a function associated with the control mode is controllable based on a user input provided to the touch-sensitive surface.

2. The control device of claim 1, wherein the touch-sensitive surface is partitioned into a plurality of cells and is configured to be illuminable on a per-cell basis.

3. The control device of claim 1 or 2, wherein the function is controlled based on a number of cells touched by the user when the user performs a drag input on the touch-sensitive surface.

4. The control device of any one of claims 1 to 3, wherein the display device is configured to display a first interface for controlling an air volume and a wind direction of an air vent when a first control mode is implemented.

5. The control device of claim 4, wherein an image of the air vent is displayed on the first interface, and
wherein a determination is made as to whether the air vent is to be operated in response to a first user input provided on the touch-sensitive surface.

6. The control device of claim 4 or 5, wherein the air volume and the wind direction of the air vent are adjusted based on a second user input, and
wherein adjustments to the air volume and the wind direction are proportional to a size of a touch area associated with the second input.

7. The control device of any one of claims 1 to 6, wherein the display device is configured to display a second interface for controlling brightness and color of a lighting device when a second control mode is implemented.

8. The control device of claim 7, wherein an image of the lighting device is displayed on the second interface, and
wherein an operating mode of the lighting device is determined based on a first user input provided on the touch-sensitive surface.

9. The control device of claim 7 or 8, wherein the brightness and the color of the lighting device are adjusted based on a second user input, and
wherein adjustments to the brightness and the color are proportional to a size of a touch area associated with the second input.

10. The control device of any one of claims 1 to 9, wherein the interior panel is operatively linked to a glove box when a third control mode is implemented, and
wherein the glove box is opened or closed in response to an user input provided to the touch-sensitive surface.

11. A method of controlling vehicle functions using a control device including a display device operatively linked to an interior panel having a touch-sensitive surface, the method comprising:
changing a control mode of the interior panel by operating the display device;
illuminating at least a portion of the touch-sensitive surface in response to detecting a user touch on the touch-sensitive surface; and
controlling a function associated with the control mode based on a user input provided to the touch-sensitive surface.

12. The method of claim 11, wherein the touch-sensitive surface is partitioned into a plurality of cells, and
wherein the illuminating of at least the portion of the touch-sensitive surface comprises illuminating the touch-sensitive surface on a per-cell basis in response to the user touch.

13. The method of claim 11 or 12, further comprising displaying, on the display device, a first interface for controlling an air volume and a wind direction of a vehicle air vent when a first control mode is selected.

14. The method of any one of claims 11 to 13, further comprising displaying, on the display device, a second interface for controlling a brightness and a color of a vehicle lighting device when a second control mode is selected.

15. The method of any one of claims 11 to 14, further comprising:
operatively linking the interior panel to a vehicle glove box when a third control mode is selected; and
opening or closing the glove box in response to a user input detected on the touch-sensitive surface.
